# EUROPEAN PATENT APPLICATION

(11) **EP 4 686 208 A1**
(43) Date of publication of application: **28.01.2026**
(21) Application number: 23942946.7
(22) Date of filing: 30.06.2023
(51) Int. Cl.: H04N 21/43, H04N 21/4363, H04N 21/422

(54) **AUDIO AND VIDEO TRANSMISSION SYSTEM, AUDIO AND VIDEO APPARATUS, AND WIRELESS MICROPHONE EMISSION APPARATUS**

(71) Applicant: Shenzhen Hollyland Technology Co., Ltd., Shenzhen, Guangdong 518108 (CN)
(72) Inventor: LIU, Dezhi, Shenzhen, Guangdong 518108 (CN); ZHOU, Qiang, Shenzhen, Guangdong 518108 (CN); WENG, Panjiang, Shenzhen, Guangdong 518108 (CN)
(74) Representative: Grünecker Patent- und Rechtsanwälte PartG mbB
(86) International application number: PCT/CN2023/104595
(87) International publication number: WO 2025/000440

(57) **Abstract**

Provided in the embodiments of the present description are an audio and video transmission system, an audio and video apparatus, and a wireless microphone emission apparatus. The system comprises a wireless microphone emission apparatus and an audio and video apparatus, wherein the audio and video apparatus may acquire in real time first timecode data, which is carried by video data collected by a photographic apparatus, and send the currently acquired first timecode data to the wireless microphone emission apparatus; and the wireless microphone emission apparatus may update a local clock on the basis of the received first timecode data, so as to synchronize the local clock with a clock of the photographic apparatus, and on the basis of the synchronized local clock, perform coding processing on original audio data collected by the wireless microphone emission apparatus itself, so as to obtain audio data carrying second timecode data. Since an original transmission link in an audio and video transmission system can be directly reused for transmitting timecode data, so as to realize clock alignment without the need for changing a hardware structure of a device, convenience and rapidness are achieved, and implementation is easy.

## Description

### TECHNICAL FIELD

The present specification relates to the field of communication technology, and in particular, to an audio and video (AV) transmission system, an audio and video (AV) apparatus, and a wireless microphone transmitting apparatus.

### BACKGROUND

During a process of producing audio and video (AV), it is necessary to complete photographing of video data and collection of audio data, and then synchronize both the video data and the audio data to finally produce an AV file. For a scenario in which a photographed object is far away from a camera apparatus, a wireless microphone transmitting apparatus is usually worn on the photographed object to collect audio data of the photographed object, and sends the audio data of the photographed object to a wireless microphone receiving apparatus located on a side of the camera apparatus. And the received audio data are input to the camera apparatus by the wireless microphone receiving apparatus, so that the camera apparatus mixes the collected video data and the received audio data to obtain mixed AV data, and then outputs the mixed AV data.

Due to a certain delay during transmitting the audio data from the wireless microphone transmitting apparatus to the camera apparatus, there is also a certain delay between the audio data and the video data recorded by the camera apparatus, resulting in poor synchronization between the audio data and the video data. In addition, because the audio data is transmitted by using a wireless technology, some audio data may be lost during a process of wireless transmission. And if the audio data is lost, the recorded AV data cannot be used for a long period of time. Therefore, for the foregoing scenario, a solution for synchronizing the audio data and the video data more accurately needs to be provided.

### SUMMARY

Based on this, an audio and video (AV) transmission system, an audio and video (AV) apparatus, and a wireless microphone transmitting apparatus are provided in embodiments of the present specification.

According to a first aspect of the embodiments of the present specification, an audio and video (AV) transmission system is provided. The system includes a wireless microphone transmitting apparatus and an AV apparatus, where the wireless microphone transmitting apparatus is wirelessly connected to the AV apparatus;
the AV apparatus is configured to: connect to an external camera apparatus, acquire, in real time, first timecode data carried in video data collected by the camera apparatus, and send the first timecode data currently acquired to the wireless microphone transmitting apparatus;
the wireless microphone transmitting apparatus is configured to: update, based on received first timecode data, a local clock, to synchronize the local clock with a clock of the camera apparatus, and encode, based on the synchronized local clock, original audio data collected by the wireless microphone transmitting apparatus, to obtain audio data carrying second timecode data.

According to a second aspect of the embodiments of the present specification, an audio and video (AV) apparatus is provided. The AV apparatus is connected to an external camera apparatus, the AV apparatus is wirelessly connected to a wireless microphone transmitting apparatus, and the AV apparatus is configured to: acquire, in real time, first timecode data carried in video data collected by the camera apparatus, and send the first timecode data currently acquired to the wireless microphone transmitting apparatus, so that the wireless microphone transmitting apparatus updates, based on received first timecode data, a local clock, to synchronize the local clock with a clock of the camera apparatus, and encodes, based on the synchronized local clock, original audio data collected by the wireless microphone transmitting apparatus to obtain audio data carrying second timecode data.

According to a third aspect of the embodiments of the present specification, a wireless microphone transmitting apparatus is provided. The wireless microphone transmitting apparatus is wirelessly connected to an audio and video (AV) apparatus, the AV apparatus is connected to an external camera apparatus, the wireless microphone transmitting apparatus is configured to: receive first timecode data carried in video data collected by the camera apparatus sent by the AV apparatus, update, based on the received first timecode data, a local clock, to synchronize the local clock with a clock of the camera apparatus, and encode, based on the synchronized local clock, original audio data collected by the wireless microphone transmitting apparatus to obtain audio data carrying second timecode data.

By applying the solution of the embodiments of the present specification, an audio and video (AV) transmission system is provided. The system includes a wireless microphone transmitting apparatus and an AV apparatus, the AV apparatus may acquire, in real time, first timecode data carried in video data collected by a camera apparatus, and send the first timecode data currently acquired to the wireless microphone transmitting apparatus. The wireless microphone transmitting apparatus may update, based on received first timecode data, a local clock, to synchronize the local clock with a clock of the camera apparatus, and encode, based on the synchronized local clock, original audio data collected by the wireless microphone transmitting apparatus, to obtain audio data carrying second timecode data. By means of existing devices in the system and transmission links between the devices, the clock of the camera apparatus and the clock of the wireless microphone transmitting apparatus are synchronized. Then the synchronized clock is used to obtain the audio data carrying the timecode data and the video data carrying the timecode data, so that the two types of data are aligned by means of the timecode data. Since original transmission links in the AV transmission system can be directly multiplexed, the hardware structures of the devices do not need to be changed, which is convenient and fast and easy to implement.

It should be understood that the above general description and the following detailed description are merely examples and explanations, and cannot limit the present specification.

### BRIEF DESCRIPTION OF DRAWINGS

The accompanying drawings, which are incorporated in and constitute a part of this specification, illustrate embodiments consistent with the present specification and, together with the description, serve to explain the principles of this specification.
FIG. 1 is a schematic diagram illustrating an application scenario for collecting audio and video, according to an embodiment of the present specification.
FIG. 2 is a schematic diagram illustrating clock synchronization between a camera apparatus and a wireless microphone transmitting apparatus by using a timecode device, according to an embodiment of the present specification.
FIG. 3 is a schematic diagram illustrating an audio and video transmission system, according to an embodiment of the present specification.
FIG. 4 is a schematic diagram illustrating an audio and video transmission system, according to an embodiment of the present specification.
FIG. 5 is a schematic diagram of a logical structure of an audio and video transmission system, according to an embodiment of the present specification.
FIG. 6 is a schematic diagram of a logical structure of an audio and video transmission system, according to an embodiment of the present specification.
FIG. 7 is a schematic diagram of a logical structure of an audio and video transmission system, according to an embodiment of the present specification.
FIG. 8 is a schematic diagram illustrating an audio and video transmission system, according to an embodiment of the present specification.
FIG. 9 is a schematic diagram illustrating transmission delay of first timecode data, according to an embodiment of the present specification.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the present specification. Instead, they are merely examples of apparatus and methods consistent with some aspects of the present specification as detailed in the appended claims.

The terminology used herein is for the purpose of describing particular embodiments only and is not intended to be limiting of the specification. As used in this specification and the appended claims, the singular forms "a", "the" and "said" are intended to include the plural forms as well, unless the context clearly indicates otherwise. It will also be understood that the term "and/or" as used herein refers to and encompasses any and all possible combinations of one or more of the associated listed items.

It should be understood that although the terms "first", "second", "third", etc. may be used in this specification to describe various information, the information should not be limited to these terms. These terms are only used to distinguish the same type of information from each other. For example, without departing from the scope of this specification, first information may also be referred to as second information, and similarly, the second information may also be referred to as the first information. Depending on the context, the word "if" as used herein may be interpreted as "when" or "upon" or "in response to determining".

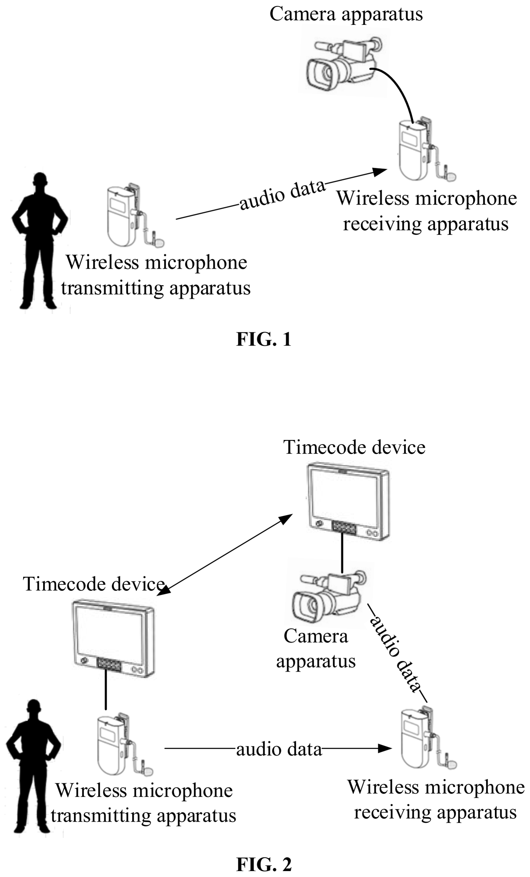

During producing audio and video (AV), it is necessary to complete photographing of video data and collection of audio data, and then synchronize both the video data and the audio data to finally produce an AV file. Considering a scenario in which a photographed object is far away from a camera apparatus, directly using a built-in microphone of the camera apparatus to collect the audio data of the photographed object will result in poor performance. Therefore, as shown in FIG. 1, a wireless microphone transmitting apparatus is usually worn on the photographed object to collect audio data of the photographed object, and sends the audio data of the photographed object to a wireless microphone receiving apparatus located on a side of the camera apparatus. And the received audio data are input to the camera apparatus by the wireless microphone receiving apparatus, so that the camera apparatus mixes the collected video data and the received audio data to obtain mixed AV data, and then outputs the mixed AV data.

Due to a certain delay during transmitting the audio data from the wireless microphone transmitting apparatus to the camera apparatus, there is also a delay between the audio data and the video data recorded by the camera apparatus, as a result, the synchronization effect between the audio data and video data in the mixed AV data is usually poor. In addition, because the audio data is transmitted by using a wireless technology, some audio data may be lost during a process of wireless transmission. And if the audio data is lost, the recorded AV data cannot be used for a long period of time.

In a related art, when synchronizing data collected by two devices, an external timecode device is commonly used to synchronize clocks of the two devices, to obtain data carrying a timecode based on the synchronized clocks, so as to synchronize the data collected by the two devices based on the timecode. For example, as shown in FIG. 2, in order to realize an accurate synchronization of the audio data collected by the wireless microphone transmitting apparatus and the video data collected by the camera apparatus, it is easy to think that each of the wireless microphone transmitting apparatus and the camera apparatus is connected to a respective external timecode device. The two external timecode devices may be connected in a wired or wireless manner. The clock of the wireless microphone transmitting apparatus and the clock of the camera apparatus may be synchronized through the two timecode devices. Then the wireless microphone transmitting apparatus may obtain the audio data carrying the timecode by encoding based on the synchronized clock, and the camera apparatus may obtain the video data carrying the timecode by encoding based on the synchronized clock. And the alignment between the audio data and the video data may be realized later based on the timecodes carried in the two types of data. Although this method can achieve the accurate synchronization of the audio data and the video data, the whole system is too complex due to additional addition of the two timecode devices.

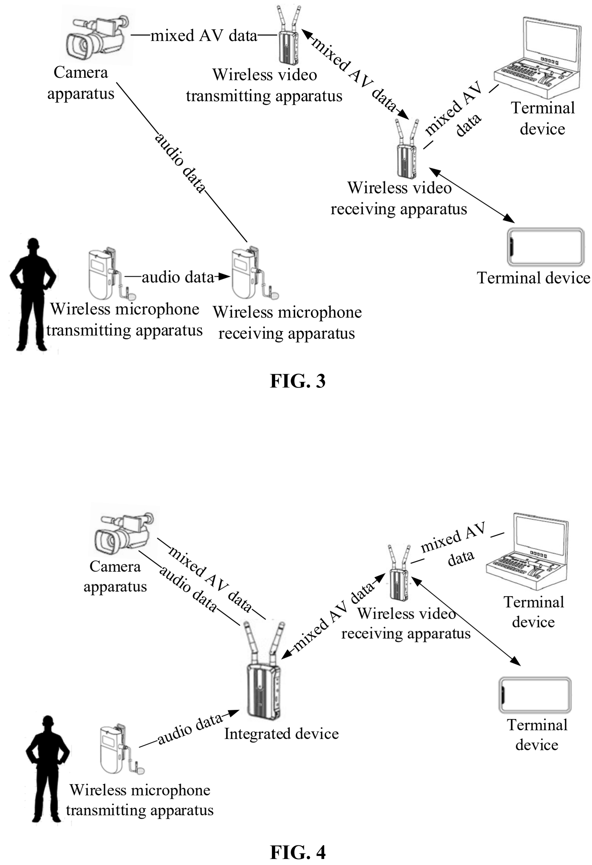

In a video photographing scenario, a director, a producer and the like usually need to view the photographed audio and video in real time, and therefore, a wireless video transmission apparatus is usually further disposed in the system, to transmit the mixed AV data recorded by the camera apparatus to a terminal device (for example, a monitoring station or a production station) of the director, the producer, or other worker, so that these workers can view the recording result in real time. For example, as shown in FIG. 3, in some scenarios, the camera apparatus may generally be further connected to a wireless video transmitting apparatus. Generally, the camera apparatus may be connected to the wireless video transmitting apparatus through a video transmission interface such as SDI/HDMI, and then transmit the mixed AV data to the wireless video transmitting apparatus through the video transmission interface. Then the mixed AV data are sent to the wireless video receiving apparatus by the wireless video transmitting apparatus. The wireless video receiving apparatus may send the AV data to one or more terminal devices for display to related workers.

Alternatively, in some scenarios, as shown in FIG. 4, in order to simplify the system, the function of the wireless microphone receiving apparatus and the function of the wireless video transmitting apparatus may also be integrated on one device (hereinafter referred to as an integrated device). The audio data is acquired from the wireless microphone transmitting apparatus, by the integrated device, and then input into the camera apparatus. Meanwhile, the mixed AV data output by the camera apparatus may be acquired, by the integrated device, and then sent to the wireless video receiving apparatus.

In view of the above video photographing scenario, since the wireless microphone transmitting apparatus and the camera apparatus are in the same system, the wireless microphone transmitting apparatus can be connected to the camera apparatus through a series of devices. The wireless video transmitting apparatus (or the above-mentioned integrated device) itself is provided with a video data transmission interface, and can acquire the video data from the camera apparatus. While the video data carry timecode data (hereinafter referred to as first timecode data). Therefore, the wireless video transmitting apparatus can directly acquire the timecode data from the video data and transmit the timecode data to the wireless microphone transmitting apparatus, so that the wireless microphone transmitting apparatus can realize the clock synchronization between the local clock and the clock of the camera apparatus based on the timecode data. Therefore, in order to simplify the whole system, the existing devices in the system and the transmission links between the devices can be directly used to realize the clock synchronization between the two clocks. And then the audio data carrying the timecode data and the video data carrying the timecode data are obtained by using the synchronized clock. Since the original transmission links in the system can be directly multiplexed, the hardware structures of the devices do not need to be changed, which is convenient and fast and easy to implement.

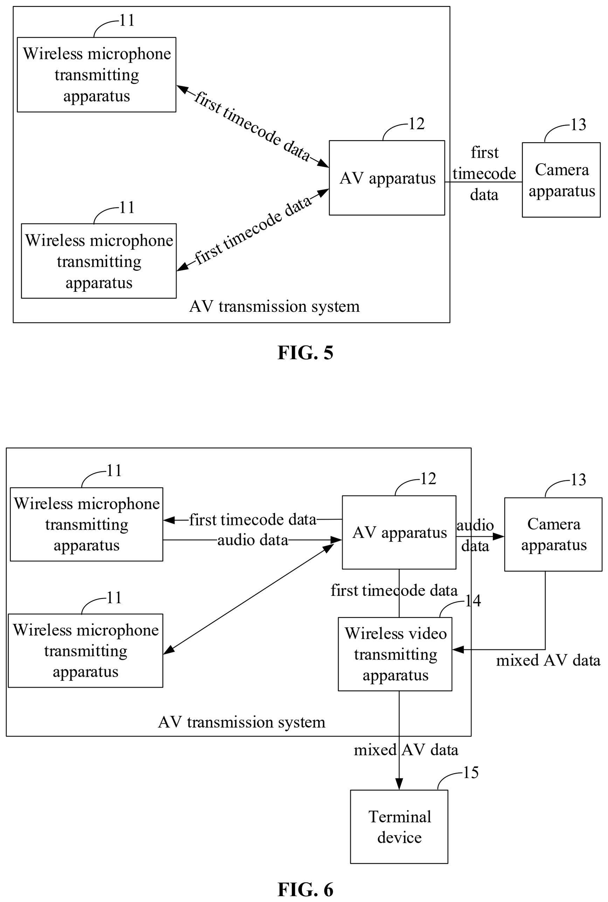

Based on this, an audio and video (AV) transmission system is provided in an embodiment of this disclosure, as shown in FIG. 5, the AV transmission system includes a wireless microphone transmitting apparatus 11 and an AV apparatus 12, where the wireless microphone transmitting apparatus 11 may be located on a side of a photographed object, the AV apparatus 12 may be located on a side of a camera apparatus 13, and the wireless microphone transmitting apparatus 11 may be wirelessly connected to the AV apparatus 12.

There may be one or more wireless microphone transmitting apparatuses 11 (for example, a scenario in which the photographed object includes multiple people). For example, the wireless microphone transmitting apparatus 11 may be worn on the photographed object for collecting the audio data of the photographed object, and then may compress and encode the AV data and wirelessly transmit the compressed and encoded AV data to the wireless microphone receiving apparatus. Alternatively, the wireless microphone transmitting apparatus 11 may store the collected audio data locally.

The AV apparatus 12 may be communicatively connected to an external camera apparatus 13, and the AV apparatus 12 may be connected to the external camera apparatus 13 in a wired or wireless manner. For example, in some scenarios, the AV apparatus 12 and the external camera apparatus 13 may be connected in a wired manner through some hardware interfaces disposed on the devices, for example, may be connected through interfaces such as HDMI, SDI, and USB, to transmit the video data.

The AV apparatus 12 may acquire the first timecode data carried in the video data collected by the camera apparatus 13 in real time, and send the first timecode data currently acquired to the wireless microphone transmitting apparatus 11. For example, in some scenarios, the AV apparatus 12 may be directly connected to the camera apparatus 13 through a hardware interface, and acquire the first timecode data output by the camera apparatus 13 in real time. In some scenarios, the AV apparatus 12 may also be indirectly connected to the camera apparatus 13, for example, the AV apparatus 12 may be connected to other devices connected to the camera apparatus 13, and acquire the first timecode data from the other devices. After acquiring the first timecode data, the AV apparatus 12 may send the first timecode data to the wireless microphone transmitting apparatus 11 by using various wireless transmission technologies (for example, technologies such as Bluetooth, WIFI, and Zigbee).

After receiving the first timecode data, the wireless microphone transmitting apparatus 11 may update the local clock by using the first timecode data, so as to synchronize the local clock with the clock of the camera apparatus 13. Then, based on the synchronized local clock, the original audio data collected by the wireless microphone transmitting apparatus 11 may be encoded to obtain the audio data carrying timecode data (hereinafter referred to as second timecode data).

Where, the timecode data may be used to accurately mark which data was collected at which time. For example, taking the timecode data of the video data as an example, it includes: time: minute: second: frame. For example, assuming that the timecode data is: 9:00:00:1, it indicates that a first frame of an image was collected at 9:00:00. The audio data may also be marked by using a similar method.

In some embodiments, the AV apparatus 12 may be an apparatus having only a function for wirelessly receiving audio data, that is, the AV apparatus 12 is similar to the wireless microphone receiving apparatus in FIG. 3, and may be configured to receive the audio data from the wireless microphone transmitting apparatus 11 and then input the audio data to the camera apparatus 13, so that the camera apparatus 13 may mix the audio data and the collected video data to obtain the mixed AV data.

In some embodiments, the AV apparatus 12 may be an apparatus that has both the function for wirelessly receiving audio data and a function for wirelessly sending video data, that is, the AV apparatus 12 may integrate functions of the wireless microphone receiving apparatus and the wireless video transmitting apparatus into one device, similar to the integrated device in FIG. 4.

In some embodiments, if the AV apparatus 12 only has the function for wirelessly receiving audio data, in order to remotely send the AV data collected by the camera apparatus 13 to terminal devices of workers such as the director and the producer, as shown in FIG. 6, the AV system may further include a wireless video transmitting apparatus 14, and the wireless video transmitting apparatus 14 may be respectively connected to the camera apparatus 13 and the AV apparatus 12 in a wired manner. After receiving the audio data, the AV apparatus 12 may transmit the audio data to the camera apparatus 13. After mixing the collected video data and the audio data to obtain the mixed AV data, the camera apparatus 13 may transmit the mixed AV data to the wireless video transmitting apparatus 14 through the hardware interface. The wireless video transmitting apparatus 14 may acquire the first timecode data carried in the video data from the mixed AV data, and transmit the first timecode data to the AV apparatus 12, so that the AV apparatus 12 sends the first timecode data to the wireless microphone transmitting apparatus 11. In addition, the mixed AV data may be compressed and encoded by the wireless video transmitting apparatus 14, then sent to the terminal device 15.

In some embodiments, the wireless video transmitting apparatus 14 may be connected to the camera apparatus 13 through an SDI interface or a HDMI interface. And the wireless video transmitting apparatus 14 may be connected to the AV apparatus 12 through a USB interface. Certainly, the foregoing is merely an example, and when the above-mentioned data transmission is implemented, other types of interfaces may be provided based on an actual requirement.

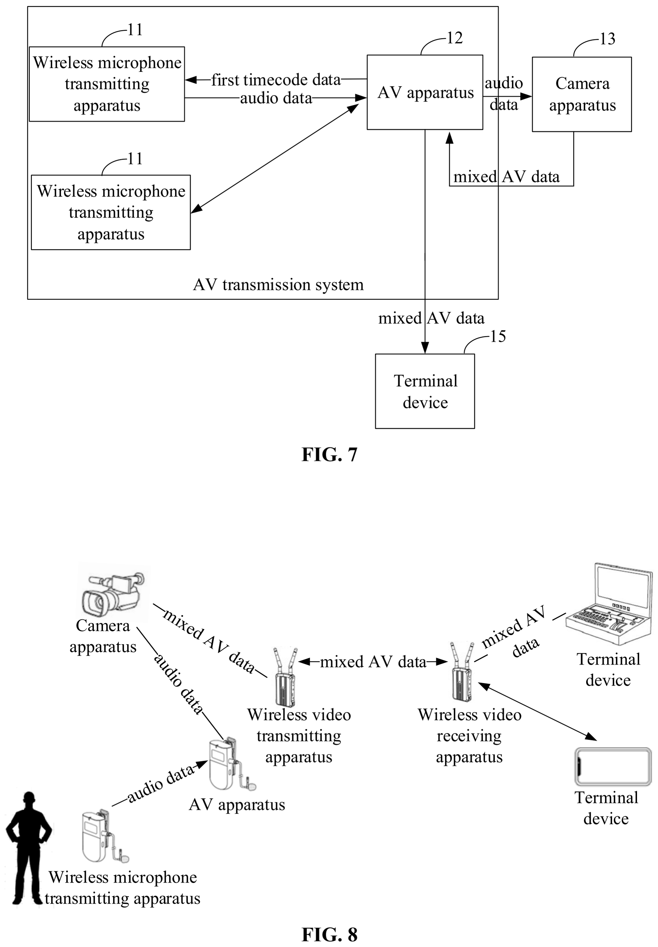

In some embodiments, as shown in FIG. 7, when the AV apparatus 12 has both the function for wirelessly receiving audio data and the function for wirelessly sending video data, the AV apparatus 12 may receive audio data from the wireless microphone transmitting apparatus 11 and then transmit the audio data to the camera apparatus 13. Moreover, the AV apparatus 12 may acquire the mixed AV data from the camera apparatus 13, then acquire the first timecode data carried in the video data from the mixed AV data, and send the first timecode data to the wireless microphone transmitting apparatus 11. In addition, the mixed AV data may be compressed and encoded by the AV apparatus 12, then sent to the terminal device 15.

In some embodiments, the AV transmission system may further include a wireless video receiving apparatus, and the AV apparatus 12 or the wireless video transmitting apparatus 14 may transmit the mixed AV data to the wireless video receiving apparatus. And the mixed AV data are transmitted to the terminal device 15 by the wireless video receiving apparatus.

In some embodiments, there is a certain transmission delay when the first timecode data is output from the camera apparatus 13 and then transmitted to the wireless microphone transmitting apparatus 11 through the transmission link. Therefore, when updating the local clock based on the received first timecode data, the wireless microphone transmitting apparatus 11 may first determine the transmission delay generated by transmitting the first timecode data from the camera apparatus 13 to the wireless microphone transmitting apparatus 11, then determine, based on time carried in the first timecode data and the transmission delay, target time, and then update, based on deviation between the target time and local system time of the wireless microphone transmitting apparatus 11, the local clock of the wireless microphone transmitting apparatus 11.

In some embodiments, a trigger condition may be predetermined. After the predetermined condition is triggered, the AV apparatus 12 may send the first timecode data currently acquired to the wireless microphone transmitting apparatus 11.

In some embodiments, the predetermined condition may indicate that a video recording state of the camera apparatus 13 is switched between an on state and an off state. For example, when the camera apparatus 13 enables video recording, generally, the wireless microphone transmitting apparatus 11 also needs to be enabled to synchronously collect the audio data. The first timecode data carried in the video data can be sent to the wireless microphone transmitting apparatus 11, so that the wireless microphone transmitting apparatus 11 synchronizes the local clock with the clock of the camera apparatus 13, and then generates the second timecode data of the audio data based on the synchronized clock. Then, the video data and the audio data can be aligned based on the first timecode data carried in the video data and the second timecode data carried in the audio data subsequently.

In some embodiments, even if the clocks of the camera apparatus 13 and the wireless microphone transmitting apparatus 11 have been synchronized once at the time of enabling the video recording, the clocks of the camera apparatus 13 and the wireless microphone transmitting apparatus 11 will gradually deviate over time. And the deviation may be large when a long time has elapsed. For example, it is assumed that the wireless microphone transmitting apparatus adopts an RTC clock with an accuracy of ± 10 PPM, the frequency difference is: 32768.32768 Hz-32767.67232 Hz, the time error per day is 0.864 × 1 = 0.864 seconds, and the total deviation of one year is 5.256 minutes. Assuming that the duration of audio recording is 4 hours, and the deviation of the local RTC clock is 144 ms, if a clock with a large deviation is used to generate the timecode data, the audio and video cannot be synchronized finally, resulting in a mismatch between mouth shape and sound.

In order to avoid a large deviation between the local clocks of the camera apparatus 13 and the wireless microphone transmitting apparatus 11, the synchronization operation for the clocks of the camera apparatus 13 and the wireless microphone transmitting apparatus 11 may be performed once every predetermined duration. Therefore, the predetermined condition may also indicate that the duration since a last sending of the first timecode data to the wireless microphone transmitting apparatus 11 reaches the predetermined duration. For example, the AV apparatus 12 may send the current first timecode data to the wireless microphone transmitting apparatus 11 once every predetermined duration, so that the wireless microphone transmitting apparatus 11 updates the local clock based on the first timecode data. The predetermined duration may be set based on an acceptable delay of the audio data and the video data. For example, the predetermined duration may be set to 5s. It is assumed that the wireless microphone transmitting apparatus adopts the RTC clock with the accuracy of ± 10 PPM, and the frequency difference is 32768.32768 Hz - 32767.67232 Hz, if the synchronization is performed every 5s, the clock deviation between the audio data and the video data may be controlled within 50 us, that is, within an acceptable range.

Certainly, in actual processing, the predetermined duration may be adjusted based on a requirement for accuracy of audio and video synchronization. If it is desired to achieve higher synchronization accuracy, the predetermined duration may be set to be longer, and vice versa.

In the related art, when the wireless microphone transmitting apparatus 11 is used to collect the audio data and the camera apparatus 13 is used to collect the video data, generally, there may be large deviations between the times of enabling video recording and audio data collecting, and between the times of disenabling the video recording and the audio data collecting. For example, generally, it is possible that after a video recorder presses the "Record" button of the camera apparatus 13, the photographed object is notified that recording has started, and then turns on the wireless microphone transmitting apparatus 11. Alternatively, after the photographed object turns on the wireless microphone transmitting apparatus 11, the recorder is notified and then enables the video recording. Or even the photographed object forgets to turn on the wireless microphone transmitting apparatus 11 after the recording has been enabled. In the existing technology, quick synchronization of recording or pausing of audio and video cannot be implemented, resulting in that a part of audio data without video or a part of video data without audio needs to be removed by manual editing subsequently, which is relatively cumbersome.

To avoid the above problems, in some embodiments, the AV apparatus 12 may send, in response to determining that the video recording state of the camera apparatus 13 is switched from the off state to the on state, a first trigger signal to the wireless microphone transmitting apparatus 11, where the first trigger signal is used to control the wireless microphone transmitting apparatus 11 to enable an audio recording function.

The AV apparatus 12 may send, in response to determining that the video recording state of the camera apparatus 13 is switched from the on state to the off state, a second trigger signal to the wireless microphone transmitting apparatus 11, where the second trigger signal is used to control the wireless microphone transmitting apparatus 11 to disenable the audio recording function.

In an embodiment of this disclosure, when the camera apparatus enables video recording or disenables video recording, by multiplexing existing transmission links in the system, the trigger signal is sent to the wireless microphone transmitting apparatus 11, to control the wireless microphone transmitting apparatus 11 to synchronously enable audio recording or disenable audio recording. Since the transmission time of the signal is short, the recording can be enabled or disenabled synchronously.

In some embodiments, the AV apparatus 12 may acquire a state indication signal for indicating a current video recording state of the camera apparatus 13 in real time, and determine, based on the state indication signal, the video recording state of the camera apparatus 13 is switched between the on state and the off state. For example, if the AV apparatus 12 is directly connected to the camera apparatus 13, the state indication signal may be directly acquired from the camera apparatus 13. If the AV apparatus 12 is connected to the wireless video transmitting apparatus 14, the wireless video transmitting apparatus 14 may acquire the state indication signal from the camera apparatus 13 and then transmit the state indication signal to the AV apparatus 12.

Considering that the alignment between the audio data and the video data is to be implemented based on the timecode data, when the collected original audio data is encoded to obtain the audio data carrying the timecode data or the video data carrying the timecode data, it needs to ensure that the frame rates of the audio data and the video data are consistent. Therefore, In some embodiments, the AV apparatus 12 is further configured to acquire a frame rate for collecting video data of the camera apparatus 13 in real time, and send, in response to detecting that the video recording state of the camera apparatus 13 is switched from the off state to the on state, the frame rate to the wireless microphone transmitting apparatus 11, so that the wireless microphone transmitting apparatus 11 encodes the audio data based on the frame rate to obtain the audio data carrying the second timecode data.

Considering that the frame rate is generally kept unchanged during the video recording after the frame rate is set, thus, after the frame rate is acquired from the camera apparatus 13, the frame rate may be sent, when it is detected that the recording state of the camera apparatus 13 is switched from the off state to the on state (that is, enable recording), to the wireless microphone transmitting apparatus 11, so that the wireless microphone transmitting apparatus 11 collects the original audio data based on the frame rate, and encodes the collected original audio data.

Of course, in practical applications, the AV apparatus 12 may also acquire the frame rate of the video data in real time, and if a change in the frame rate is detected, send the changed frame rate to the wireless microphone transmitting apparatus 11, so that the wireless microphone transmitting apparatus 11 collects the original audio data based on the changed frame rate, and encodes the collected original audio data.

In the existing technology, generally, the wireless microphone transmitting apparatus 11 sends the collected audio data to the wireless microphone receiving apparatus, and then the wireless microphone receiving apparatus inputs the received audio data into the camera apparatus 13, and then the camera apparatus 13 mixes the collected video data and the audio data to obtain mixed AV data, and then locally stores the mixed AV data. In this scenario, there may be a problem that the audio data is lost during a process of wireless transmission, so that finally stored mixed AV data cannot be used. In order to avoid the above problem, in some embodiments, after the wireless microphone transmitting apparatus 11 encodes the original audio data collected by itself based on the synchronized local clock to obtain the audio data carrying the second timecode data, the audio data carrying the second timecode data may be stored locally. Subsequently, during audio and video production, the audio data carrying the second timecode data and the video data carrying the first timecode data may be imported into some AV production software. And then the audio data and the video data may be aligned based on the timecode data carried thereof by using a function of one-key timecode alignment to obtain the AV file.

In addition, an audio and video apparatus is further provided in the present disclosure, where the audio and video (AV) apparatus is connected to an external camera apparatus, the AV apparatus is wirelessly connected to a wireless microphone transmitting apparatus, and the AV apparatus is configured to: acquire, in real time, first timecode data carried in video data collected by the camera apparatus, and send the first timecode data currently acquired to the wireless microphone transmitting apparatus, so that the wireless microphone transmitting apparatus updates, based on received first timecode data, a local clock, to synchronize the local clock with a clock of the camera apparatus, and encodes, based on the synchronized local clock, original audio data collected by the wireless microphone transmitting apparatus to obtain audio data carrying second timecode data.

In some embodiments, the AV apparatus is configured to send, after a predetermined condition is triggered, the first timecode data currently acquired to the wireless microphone transmitting apparatus.

In some embodiments, the predetermined condition includes any one of the following:
a duration since a last sending of the first timecode data to the wireless microphone transmitting apparatus reaches a predetermined duration;
a video recording state of the camera apparatus is switched between an on state and an off state.

In some embodiments, the AV apparatus is further configured to: send, in response to determining that the video recording state of the camera apparatus is switched from the off state to the on state, a first trigger signal to the wireless microphone transmitting apparatus, where the first trigger signal is used to control the wireless microphone transmitting apparatus to enable an audio recording function; and
send, in response to determining that the video recording state of the camera apparatus is switched from the on state to the off state, a second trigger signal to the wireless microphone transmitting apparatus, where the second trigger signal is used to control the wireless microphone transmitting apparatus to disenable the audio recording function.

In some embodiments, the AV apparatus is further configured to: acquire, in real time, a state indication signal for indicating a current video recording state of the camera apparatus, and determine, based on the state indication signal, the video recording state of the camera apparatus is switched between the on state and the off state.

In some embodiments, the AV apparatus is further configured to acquire a frame rate of the camera apparatus in real time, and send, in response to determining that the video recording state of the camera apparatus is switched from the off state to the on state, the frame rate to the wireless microphone transmitting apparatus; so that the wireless microphone transmitting apparatus encodes the audio data based on the frame rate to obtain audio data carrying second timecode data.

In some embodiments, the AV apparatus is further configured to: receive the audio data sent by the wireless microphone transmitting apparatus, transmit the audio data to the camera apparatus, so that the camera apparatus mixes the audio data and the video data to obtain mixed AV data, acquire the mixed AV data from the camera apparatus, and send the mixed AV data to a terminal device.

For specific functions of the AV apparatus, reference may be made to the descriptions in the above embodiments of the AV system, and details are not described herein again.

In addition, a wireless microphone transmitting apparatus is further provided in the present disclosure, where the wireless microphone transmitting apparatus is wirelessly connected to an audio and video (AV) apparatus, the AV apparatus is connected to an external camera apparatus, the wireless microphone transmitting apparatus is configured to receive first timecode data carried in video data collected by the camera apparatus sent by the AV apparatus, update, based on the received first timecode data, a local clock, to synchronize the local clock with a clock of the camera apparatus, and encode, based on the synchronized local clock, original audio data collected by the wireless microphone transmitting apparatus to obtain audio data carrying second timecode data.

In some embodiments, when the wireless microphone transmitting apparatus is configured to update the local clock based on the received first timecode data, the wireless microphone transmitting apparatus is specifically configured to:
determine, based on time carried in the first timecode data and a transmission delay of the first timecode data, target time, where the transmission delay is a delay generated when the first timecode data is transmitted from the camera apparatus to the wireless microphone transmitting apparatus; and
update, based on a bias between the target time and local system time of the wireless microphone transmitting apparatus, the local clock of the wireless microphone transmitting apparatus.

In some embodiments, the wireless microphone apparatus is configured to enable, in response to receiving a first trigger signal sent by the AV apparatus, an audio recording function, and disenable, in response to receiving a second trigger signal sent by the AV apparatus, the audio recording function; where the AV apparatus sends, in response to determining that the video recording state of the camera apparatus is switched from the off state to the on state, the first trigger signal to the wireless microphone transmitting apparatus, and sends, in response to determining that the video recording state of the camera apparatus is switched from the on state to the off state, the second trigger signal to the wireless microphone transmitting apparatus.

In some embodiments, the wireless microphone transmitting apparatus is further configured to locally store the audio data carrying the second timecode data, where the stored audio data carrying the second timecode data are used to align with the video data carrying the first timecode to produce an AV file.

For specific functions of the wireless microphone transmitting apparatus, reference may be made to the descriptions in the above embodiments of the AV system, and details are not described herein again.

To further explain the AV transmission system provided in the embodiments of the present disclosure, the following provides explanations with reference to a specific embodiment.

FIG. 8 shows an audio and video transmission system according to an embodiment of the present disclosure, and the system includes a wireless microphone transmitting apparatus, an audio and video (AV) apparatus, a wireless video transmitting apparatus, and a wireless video receiving apparatus. The AV apparatus and the wireless video transmitting apparatus are respectively connected to the camera apparatus in a wired manner, the AV apparatus is connected to the wireless video transmitting apparatus in a wired manner, the audio apparatus is wirelessly connected to the wireless microphone transmitting apparatus, and the wireless video transmitting apparatus is wirelessly connected to the wireless video receiving apparatus. A process of implementing the synchronization of the audio data and the video data by the AV transmission system is as follows.
(1) After enabling video recording, the camera apparatus may store the video data with timecode.
(2) The wireless video transmitting apparatus is connected to the camera apparatus through a HDMI or SDI interface, the video data transmitted by the camera apparatus may carry the timecode, a frame rate, and a state indication signal used to indicate a current video recording state, i.e. used to indicate whether the camera apparatus is in a state of recording video or a state of stopping recording video. For ease of description, the above three types of data are referred to as video auxiliary data. The wireless video transmitting apparatus may parse the video data output by the camera apparatus to obtain the video auxiliary data.
(3) The wireless video transmitting apparatus is connected to the AV apparatus through a USB interface, where the wireless video transmitting apparatus serves as a USB master device, the AV apparatus serves as a USB slave device, and the wireless video transmitting apparatus and the AV apparatus communicate with each other through a USB HID. The wireless video transmitting apparatus packages the video auxiliary data corresponding to each frame of the collected video data into a USB HID packet and sends the USB HID packet to the AV apparatus.
(4) The AV apparatus and the wireless microphone transmitting apparatus adopt TDMA protocol for wireless air interface transmission, where the AV apparatus serves as a master device and is connected with one or more wireless microphone transmitting apparatuses. The AV apparatus may generate a corresponding trigger signal, when determining, based on the state indication signal, the video recording state of the camera apparatus changes (that is, when the camera apparatus enables recording or disenables recording). Where in response to determining that the video recording state of the camera apparatus is switched from the off state to the on state, the trigger signal is used to control the wireless microphone transmitting apparatus to enable audio recording, and in response to determining the recording state of the camera apparatus is switched from the on state to the off state, the trigger signal is used to control the wireless microphone transmitting apparatus to disenable the audio recording.

The trigger signal, the timecode, and the frame rate are encoded and packeted, by the AV apparatus, and sent through 2.4G wireless broadcast in a wireless timeslot to which the AV apparatus belongs.

(5) After receiving the trigger signal, the timecode, and the frame rate, the wireless microphone transmitting apparatus enables audio recording or disables audio recording according to the trigger signal. If the audio recording is to be enabled, the local clock is updated by using the timecode, to implement the synchronization between the local clock and the clock of the camera apparatus. Then, based on the synchronized clock and the frame rate, the wireless microphone transmitting apparatus performs LTC encoding and recording on the collected original audio data to obtain audio data carrying the timecode, and stores the audio data carrying the timecode locally.

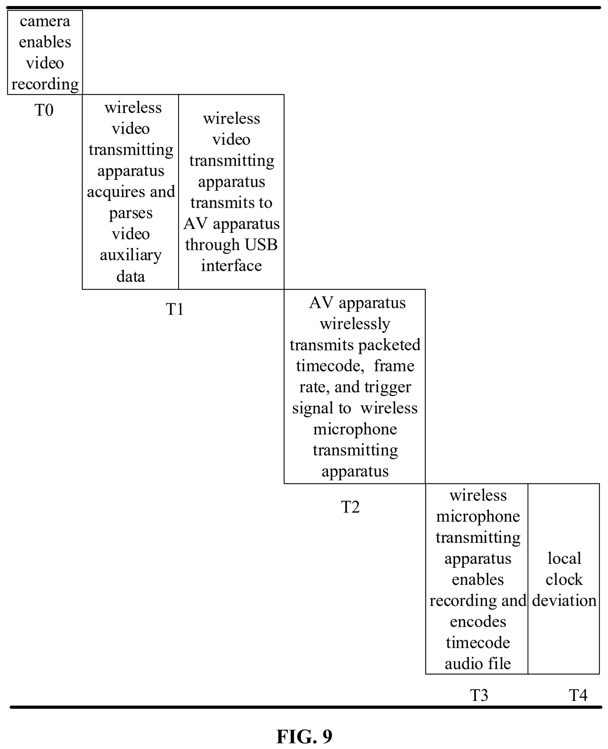

When the local clock is synchronized by using the timecode of the video data, a delay of transmitting the timecode of the video data from the camera apparatus to the wireless microphone transmitting apparatus needs to be considered, as shown in FIG. 9, which is a schematic diagram of a transmission delay. Assuming that the camera enables recording at time T0, that is, the timecode of the video data indicates that a first frame of video data is collected at the time T0, the time for the wireless microphone transmitting apparatus to trigger enabling of the audio recording is: T0+T1+T2+T3+T4.

Where, T1 represents the time taken by the wireless video transmitting apparatus to receive the video auxiliary data, align, parse and forward the video auxiliary data to the AV apparatus. T1 can be determined by means of statistical test data, and the error range is of a microsecond level.

T2 represents the sum of the time for the AV apparatus to wirelessly transmit the trigger signal, the timecode, and the frame rate to the wireless microphone transmitting apparatus and the time for packeting and unpacking USB packet. Since the TDMA wireless transmission technology is used, the time for wireless transmission is a fixed value, and the time for packeting and unpacking USB packet is also a fixed value, thus, T2 can be determined.

T3 represents the time for encoding the timecode, and is also a fixed value.

T4 represents the deviation between the RTC clock of the wireless microphone transmitting apparatus and the RTC clock of the camera apparatus, where T0+T1+T2+T3 represents the time taken by transmitting data to the wireless microphone transmitting apparatus, and can be compared with the local system time of the wireless microphone transmitting apparatus, and then the clock deviation T4 between the camera apparatus and the wireless microphone transmitting apparatus can be calculated.

(6) A high-precision RTC is used inside the wireless microphone transmitting apparatus, and after the local clock is synchronized by using the timecode of the camera apparatus, a timecode may be generated depending on the RTC clock inside the wireless microphone transmitting apparatus, to record the audio data with the timecode. Considering that there may be a large deviation between the clocks of the camera apparatus and the wireless microphone transmitting apparatus over time, in order to ensure that the clock of the camera apparatus and the clock of the wireless microphone transmitting apparatus are stably synchronized, the AV apparatus may send the timecode of the currently collected video data to the wireless microphone transmitting apparatus once every 5 seconds. After receiving the timecode, the wireless microphone apparatus may perform clock synchronization again, to ensure that the local RTC clock is synchronized with the clock of the camera end, and avoid a problem that a video material and an audio material deviate in the time code.

(7) In addition, in order to enable the director, the producer, etc. to remotely view the recorded mixed AV data, the wireless microphone transmitting apparatus may wirelessly send the collected audio data to the AV apparatus. The AV apparatus may input the audio data to the camera apparatus through the audio input interface, and the camera apparatus may mix the audio data and the video data to obtain the mixed AV data (the mixed AV data obtained in this manner has a poor synchronization effect). Then, the mixed AV data may be output to the wireless video transmitting apparatus, and the wireless video transmitting apparatus may compress and encode on the mixed AV data, and then send the compressed and encoded mixed AV data to the wireless video receiving apparatus. The wireless video receiving apparatus sends the compressed and encoded mixed AV data to the terminal device of each worker for viewing.

The various technical features in the above embodiments may be arbitrarily combined, as long as there is no conflict or contradiction between the combinations of the features, but they are not described one by one due to space limitation, so any combination of the various technical features in the above embodiments also falls within the scope of the present specification.

Other implementations of the embodiments of the specification will be apparent to those skilled in the art from consideration of the specification and practice of the specification disclosed herein. The embodiments of the present specification are intended to cover any variations, uses, or adaptations of the embodiments of the present specification, and these variations, uses, or adaptations follow the general principles of the embodiments of the present specification and include common knowledge or conventional technical means in the art that are not disclosed in the embodiments of the present specification. It is intended that the specification and embodiments be considered as exemplary only, with a true scope and spirit of the embodiments of the present specification being indicated by the following claims.

It should be understood that the embodiments of the present specification are not limited to the precise structures described above and shown in the accompanying drawings, and various modifications and changes can be made without departing from the scope thereof. The scope of the embodiments of the present specification is limited only by the appended claims.

The above descriptions are merely preferred embodiments of the embodiments of the present specification, and are not intended to limit the embodiments of the present specification, and any modification, equivalent replacement, improvement, and the like made within the spirit and principle of the embodiments of the present specification shall fall within the protection scope of the embodiments of the present specification.

## Claims

1. An audio and video, AV, transmission system, comprising a wireless microphone transmitting apparatus and an AV apparatus, wherein the wireless microphone transmitting apparatus is wirelessly connected to the AV apparatus;
the AV apparatus is configured to:
connect, to an external camera apparatus,
acquire, in real time, first timecode data carried in video data collected by the camera apparatus, and
send, the first timecode data currently acquired to the wireless microphone transmitting apparatus;
the wireless microphone transmitting apparatus is configured to:
update, based on received first timecode data, a local clock, to synchronize the local clock with a clock of the camera apparatus, and
encode, based on the synchronized local clock, original audio data collected by the wireless microphone transmitting apparatus, to obtain audio data carrying second timecode data.

2. The system according to claim 1, wherein when the wireless microphone transmitting apparatus is configured to update, based on the received first timecode data, the local clock, the wireless microphone transmitting apparatus is configured to:
determine, based on time carried in the first timecode data and a transmission delay of the first timecode data, target time, wherein the transmission delay indicates a delay generated when the first timecode data is transmitted from the camera apparatus to the wireless microphone transmitting apparatus; and
update, based on a bias between the target time and local system time of the wireless microphone transmitting apparatus, the local clock of the wireless microphone transmitting apparatus.

3. The system according to claim 1, wherein the AV apparatus is configured to send, after a predetermined condition is triggered, the first timecode data currently acquired to the wireless microphone transmitting apparatus.

4. The system according to claim 3, wherein the predetermined condition comprises any one or more of:
a duration since a last sending of the first timecode data to the wireless microphone transmitting apparatus reaches a predetermined duration; and
a video recording state of the camera apparatus is switched between an on state and an off state.

5. The system according to claim 1, wherein the AV apparatus is further configured to:
send, in response to determining that a video recording state of the camera apparatus is switched from an off state to an on state, a first trigger signal to the wireless microphone transmitting apparatus, wherein the first trigger signal is used to control the wireless microphone transmitting apparatus to enable an audio recording function; and
send, in response to determining that the video recording state of the camera apparatus is switched from the on state to the off state, a second trigger signal to the wireless microphone transmitting apparatus, wherein the second trigger signal is used to control the wireless microphone transmitting apparatus to disenable the audio recording function.

6. The system according to claim 4 or 5, wherein the AV apparatus is further configured to:
acquire, in real time, a state indication signal for indicating a current video recording state of the camera apparatus, and
determine, based on the state indication signal, the video recording state of the camera apparatus is switched between the on state and the off state.

7. The system according to claim 5, wherein the AV apparatus is further configured to:
acquire a frame rate of the camera apparatus in real time, and
send, in response to determining that the video recording state of the camera apparatus is switched from the off state to the on state, the frame rate to the wireless microphone transmitting apparatus;
the wireless microphone transmitting apparatus is configured to:
encode, based on the frame rate, the audio data to obtain the audio data carrying the second timecode data.

8. The system according to any one of claims 1-7, wherein the system further comprises a wireless video transmitting apparatus, the wireless video transmitting apparatus is respectively connected to the camera apparatus and the AV apparatus in a wired manner, and the wireless video transmitting apparatus is configured to acquire the first timecode data from the camera apparatus, and transmit the first timecode data to the AV apparatus.

9. The system according to claim 8, wherein the AV apparatus is further configured to:
receive the audio data sent by the wireless microphone transmitting apparatus, and
transmit the audio data to the camera apparatus, so that the camera apparatus mixes the audio data and the video data to obtain mixed AV data, and sends the mixed AV data to a terminal device through the wireless video transmitting apparatus.

10. The system according to claim 8, wherein the wireless video transmitting apparatus is connected to the camera apparatus through a SDI interface or a HDMI interface, and the wireless video transmitting apparatus is connected to the AV apparatus through a USB interface.

11. The system according to any one of claims 1-7, wherein the AV apparatus is further configured to:
receive the audio data sent by the wireless microphone transmitting apparatus,
transmit the audio data to the camera apparatus, so that the camera apparatus mixes the audio data and the video data to obtain mixed AV data,
acquire the mixed AV data from the camera apparatus, and
send the mixed AV data to a terminal device.

12. The system according to claim 9 or 11, wherein the system further comprises a wireless video receiving apparatus, and the wireless video transmitting apparatus or the AV apparatus is configured to send the mixed AV data to the wireless video receiving apparatus, so that the mixed AV data are sent to the terminal device by the wireless video receiving apparatus.

13. The system according to claim 1, wherein the wireless microphone transmitting apparatus is further configured to locally store the audio data carrying the second timecode data, wherein the stored audio data carrying the second timecode data are used to align with the video data carrying the first timecode to produce an AV file.

14. An audio and video, AV, apparatus, wherein the AV apparatus is connected to an external camera apparatus, the AV apparatus is wirelessly connected to a wireless microphone transmitting apparatus, and the AV apparatus is configured to:
acquire, in real time, first timecode data carried in video data collected by the camera apparatus, and
send the first timecode data currently acquired to the wireless microphone transmitting apparatus, so that the wireless microphone transmitting apparatus updates, based on received first timecode data, a local clock, to synchronize the local clock with a clock of the camera apparatus, and encodes, based on the synchronized local clock, original audio data collected by the wireless microphone transmitting apparatus to obtain audio data carrying second timecode data.

15. The AV apparatus according to claim 14, wherein the AV apparatus is configured to send, after a predetermined condition is triggered, the first timecode data currently acquired to the wireless microphone transmitting apparatus.

16. The AV apparatus according to claim 15, wherein the predetermined condition comprises any one or more of:
a duration since a last sending of the first timecode data to the wireless microphone transmitting apparatus reaches a predetermined duration; and
a video recording state of the camera apparatus is switched between an on state and an off state.

17. The AV apparatus according to claim 14, wherein the AV apparatus is further configured to:
send, in response to determining that a video recording state of the camera apparatus is switched from an off state to an on state, a first trigger signal to the wireless microphone transmitting apparatus, wherein the first trigger signal is used to control the wireless microphone transmitting apparatus to enable an audio recording function; and
send, in response to determining that the video recording state of the camera apparatus is switched from the on state to the off state, a second trigger signal to the wireless microphone transmitting apparatus, wherein the second trigger signal is used to control the wireless microphone transmitting apparatus to disenable the audio recording function.

18. The AV apparatus according to claim 14, wherein the AV apparatus is further configured to:
acquire, in real time, a state indication signal for indicating a current video recording state of the camera apparatus, and
determine, based on the state indication signal, the video recording state of the camera apparatus is switched between an on state and an off state.

19. The AV apparatus according to claim 14, wherein the AV apparatus is further configured to:
acquire a frame rate of the camera apparatus in real time, and
send, in response to determining that a video recording state of the camera apparatus is switched from an off state to an on state, the frame rate to the wireless microphone transmitting apparatus, so that the wireless microphone transmitting apparatus encodes the audio data based on the frame rate to obtain the audio data carrying the second timecode data.

20. The AV apparatus according to claim 14, wherein the AV apparatus is further configured to:
receive the audio data sent by the wireless microphone transmitting apparatus,
transmit the audio data to the camera apparatus, so that the camera apparatus mixes the audio data and the video data to obtain mixed AV data,
acquire the mixed AV data from the camera apparatus, and
send the mixed AV data to a terminal device.

21. A wireless microphone transmitting apparatus, wherein the wireless microphone transmitting apparatus is wirelessly connected to an audio and video, AV, apparatus, the AV apparatus is connected to an external camera apparatus, the wireless microphone transmitting apparatus is configured to:
receive, first timecode data carried in video data collected by the camera apparatus sent by the AV apparatus, and
update, based on the received first timecode data, a local clock to synchronize the local clock with a clock of the camera apparatus, and
encode, based on the synchronized local clock, original audio data collected by the wireless microphone transmitting apparatus to obtain audio data carrying second timecode data.

22. The wireless microphone transmitting apparatus according to claim 21, wherein when the wireless microphone transmitting apparatus is configured to update, based on the received first timecode data, the local clock, the wireless microphone transmitting apparatus is configured to:
determine, based on time carried in the first timecode data and a transmission delay of the first timecode data, target time, wherein the transmission delay indicates a delay generated when the first timecode data is transmitted from the camera apparatus to the wireless microphone transmitting apparatus; and
update, based on a bias between the target time and local system time of the wireless microphone transmitting apparatus, the local clock of the wireless microphone transmitting apparatus.

23. The wireless microphone transmitting apparatus according to claim 21, wherein the wireless microphone apparatus is configured to:
enable, in response to receiving a first trigger signal sent by the AV apparatus, an audio recording function, and
disable, in response to receiving a second trigger signal sent by the AV apparatus, the audio recording function;
wherein the AV apparatus sends, in response to determining that a video recording state of the camera apparatus is switched from an off state to an on state, the first trigger signal to the wireless microphone transmitting apparatus, and sends, in response to determining that the video recording state of the camera apparatus is switched from the on state to the off state, the second trigger signal to the wireless microphone transmitting apparatus.

24. The wireless microphone transmitting apparatus according to claim 21, wherein the wireless microphone transmitting apparatus is further configured to locally store the audio data carrying the second timecode data, wherein the stored audio data carrying the second timecode data are used to align with the video data carrying the first timecode to produce an AV file.
